# EUROPEAN PATENT SPECIFICATION

(11) **EP 1 516 139 B1**
(45) Date of publication and mention of the grant of the patent: **11.01.2006**
(21) Application number: 03727731.6
(22) Date of filing: 03.06.2003
(51) Int. Cl.: F16K 17/38, F16K 31/385

(54) **A VALVE ASSEMBLY FOR OPENING AND CLOSING A FUEL LINE**
VENTILANORDNUNG ZUM ÖFFNEN UND SCHLIESSEN EINER KRAFTSTOFFLEITUNG
ENSEMBLE SOUPAPE POUR LA FERMETURE ET L'OUVERTURE D'UNE TUYAUTERIE DE CARBURANT

(30) Priority: 18.06.2002 GB 0213936
(43) Date of publication of application: 23.03.2005
(73) Proprietor: The Linden Shield Limited, Birmingham, West Midlands BL18 5LU (GB)
(72) Inventor: LINDEN, Sean, West Midlands B75 7QJ (GB)
(74) Representative: Croston, David
(86) International application number: PCT/GB2003/002422
(87) International publication number: WO 2003/106871

(56) References cited:
- FR-A- 1 147 137
- FR-A- 2 334 032
- GB-A- 811 022
- US-A- 4 239 153

## Description

The present invention relates to a valve assembly for opening and closing a fuel line.

The applicant has previously invented a temperature sensitive valve assembly, which at high temperature shuts off a fuel supply. This invention is the subject of GB patent application No.0214736.1. A description of the temperature sensitive valve assembly of GB patent application No.0214736.1 follows hereunder, with reference to the following drawings:-
FIGURE 1 is a simple schematic view, partly in cutaway, of the temperature-sensitive safety valve assembly of GB Patent Application No. 021473 6.1 ,
FIGURE 2 is a simple schematic view of another temperature-sensitive safety valve assembly of GB Patent Application No. 0214736.1 fitted in a gas supply line,
FIGURE 3 is a simple schematic view showing a cutaway of a building and a plurality of temperature-sensitive safety valve assemblies of GB Patent Application No. 0214736.1 fitted therein,
FIGURE 4 is a simple schematic view of a floor-mounted boiler fitted with a temperature-sensitive safety valve assembly,
FIGURE 5 is a cross-sectional view of a safety valve assembly of a temperature-sensitive safety valve assembly of GB Patent Application No. 0214736.1,
FIGURE 6 is a front view of the safety valve assembly of Figure 5,
FIGURE 7 is a plan view of the safety valve assembly of Figure 5,
FIGURE 8 is a bottom view of the safety valve assembly of Figure 5,
FIGURE 9 is a bottom view of a support of the safety valve assembly of Figure 5,
FIGURE 10 is cross-sectional view of another temperature sensitive safety valve assembly of GB Patent Application No. 0214736.1,
FIGURE 11 is a plan view of the assembly of Figure 10,
FIGURE 12 is a side view of the assembly of Figure 10, and
FIGURE 13 is a side view of part of the assembly of Figure 10.

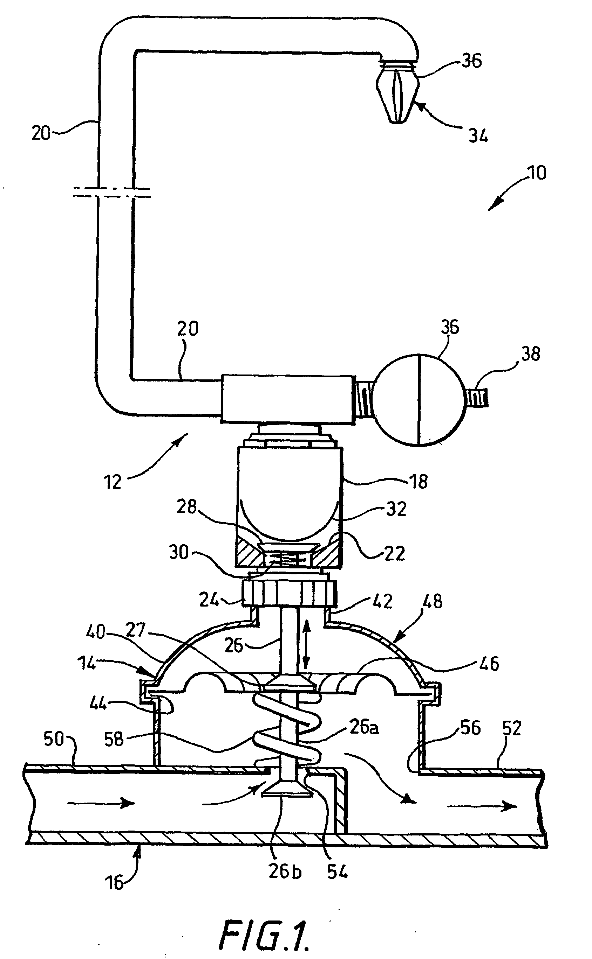

Referring to Figure 1, a temperature-sensitive safety valve assembly 10 comprises a temperature-sensitive safety valve device 12, a regulator 14 and a gas pipe 16.

The temperature safety valve device 12 comprises a housing 18, inside of which is a cavity in communication with a conduit 20.

The housing 18 comprises a valve seat 22, which defines an aperture between the housing 18 and the regulator 14.

A fastener 24 is arranged, at a remote end of the housing 18 for fastening the housing 18 to the regulator 14.

The housing 18 comprises a valve stem (or spindle) 26, arranged with a valve head 28 inside the housing above seat 22. A second valve head 27 is provided at the other end of the stem 26. A spring 30 is arranged around the stem 26 between the valve head 28 and a wall of the housing 18. The valve stem 22 has a secondary stem 26a, which extends from valve head 27, in line with valve stem 26. The secondary stem 26a has a head 26b at an end remote from the end of the secondary stem which extends from the second valve head 27. A diaphragm 32 is arranged above the valve head 28.

The conduit 20 is made of plastics. The conduit 20 is generally U-shaped.

The conduit 20 has a closure member 34, at one end, which takes the form of a glass bulb 36. The conduit has another closure member 36, at another end, which takes the form of a chamber having a one-way valve to allow gas refilling of the conduit 20. A threaded pipe 38 is provided, in communication with the closure member 36, and directly adjacent thereto, to allow connection of a gas supply and prompt refilling of the conduit 20.

The regulator 14, comprises a chamber 40, of dome-like form. The chamber 40 has an inner cavity. The chamber 40 has an aperture defined by a wall 42. The fastener 24 of the housing is threaded onto the outside of wall 42. This step is preceded by introducing the valve stem 26 into the chamber 40. The chamber 40 has an annular recess 44. The recess 44 houses a diaphragm 46, on which the valve head 27 of the valve stem 26 acts. An opening 48 in the chamber 40 allows gas to escape from the chamber to the atmosphere.

The pipe 16 comprises a first pipe part 50 and a second pipe part 52, which are, respectively, arranged before and after the temperature-sensitive safety valve device 12.
The first part 50 has an outlet defined by a valve seat 54. The second part 52 has an inlet 56. The outlet 54 and the inlet 56 are in communication with the chamber 40 of the regulator 14.

The secondary stem 26a is arranged so that the valve head 26b is arranged inside the seat 54 of the pipe part 50. Inside the chamber 40, a spring 58 is arranged between an underside of the diaphragm 46 and the first pipe part 50.

Suitable K-values for the springs 30 and 28 are utilised.

Other features of the temperature-sensitive valve assembly can be seen from FIGURE 1.

In use, the first pipe part 50 of the gas pipe 16 is connected to a mains gas supply. Ordinarily, the closure member 34 (i.e. the bulb 36 in one preferred form of the invention) is intact. Therefore, pressure caused by presence of a high pressure gas (such as air) in the conduit 20 acts on the diaphragm 32 to force the valve head 28 and the valve stem 26 down, against the bias of the spring 30. Consequently, the valve head 26b moves away from the seat 54 to allow gas therethrough. Gas is then diverted by the diaphragm 46 into the second pipe part 52 of the pipe 16. In this way, gas is free to move through the second pipe part 52 of the pipe 16 to other parts, for example, to a network of pipes in a building.

In the case of a high temperature, for example a fire, the closure member 34 fails. In the embodiment shown, shattered pieces of the bulb 36 fall downwards so as to not obstruct the conduit 20. The pressure in the conduit 20 falls leading to the valve stem 26 and the valve secondary stem 26a moving towards the conduit 20 (i.e. upwards in

FIGURE 1), under the force of the spring 58, until the valve head 26b of the secondary stem 26a moves into sealing contact with the valve seat 54 of the first pipe part 50 of the gas pipe 16. In this way, the temperature-sensitive safety valve assembly 10 quickly, efficiently, cheaply and simply shuts off the gas pipe 16.

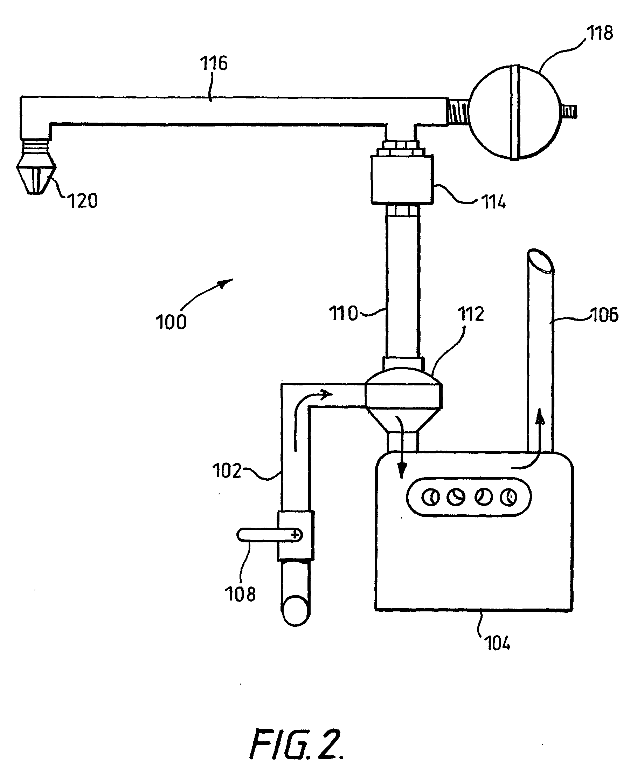

Referring to FIGURE 2, a temperature-sensitive safety valve assembly 100, is fitted in series with a gas supply line 102 and a gas meter 104, from which a gas pipe 106 is ducted to, say, part of a building.

The line 102 has a mechanical shut off lever 108 to stop gas entering the temperature-sensitive safety valve assembly 100 and building. The temperature-sensitive safety valve assembly 100 has a tube 110 arranged between a regulator part 112 and a housing part 114 of the temperature-sensitive safety valve assembly.

The conduit 116 is, as in the previous embodiment, fitted to the temperature-sensitive safety valve assembly 100 via a T-piece connector to the housing part 114. The conduit 116 extends generally horizontally. At one end of the conduit 116 there is a valve closure member 118. At the other end of the conduit 116, the conduit extends slightly vertically downwards and a bulb-type closure member 120 is arranged thereon. It will be appreciated that the temperature-sensitive safety valve assembly 100 works in a manner similar to the arrangement of FIGURE 1 and as such a full description of the working can be omitted.

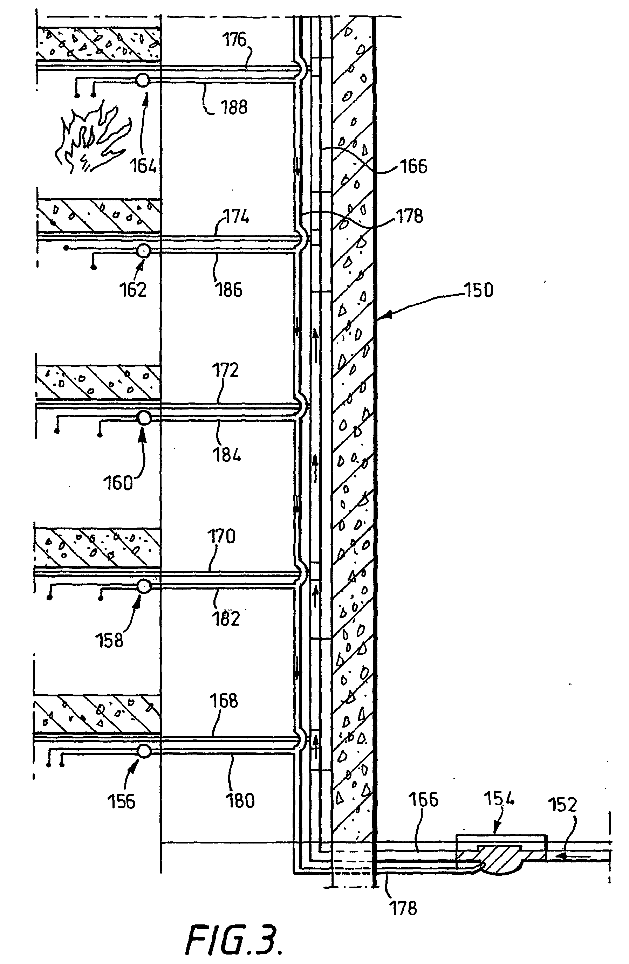

Referring to FIGURE 3, a building 150 has a plurality of floors. Outside the building 150 a gas mainline 152 communicates with a main temperature-sensitive safety valve assembly 154. The main temperature safety valve assembly 154 is in communication with secondary safety valve assemblies 156, 158, 160, 162, 164 on, say, each floor. Of course, this distribution of the secondary temperature safety valve assemblies could be varied depending on requirements. A gas line 166 extends through the floors, leading to secondary gas lines 168, 170, 172, 174, 176, supplying gas to each floor. An air line 178 also extends from the main temperature-sensitive safety valve assembly 154 to the secondary temperature-sensitive safety valve assemblies 156 - 164 via, respectively, secondary airlines, 180, 182, 184, 186, 188. In use, failure, and the consequent shutoff, of a secondary temperature-sensitive safety valve 156-164 de-pressurises the airline 178 so as to shut off the main temperature-sensitive safety valve assembly 154, outside the building. This is of course advantageous in that a fire inside the building is not fuelled.

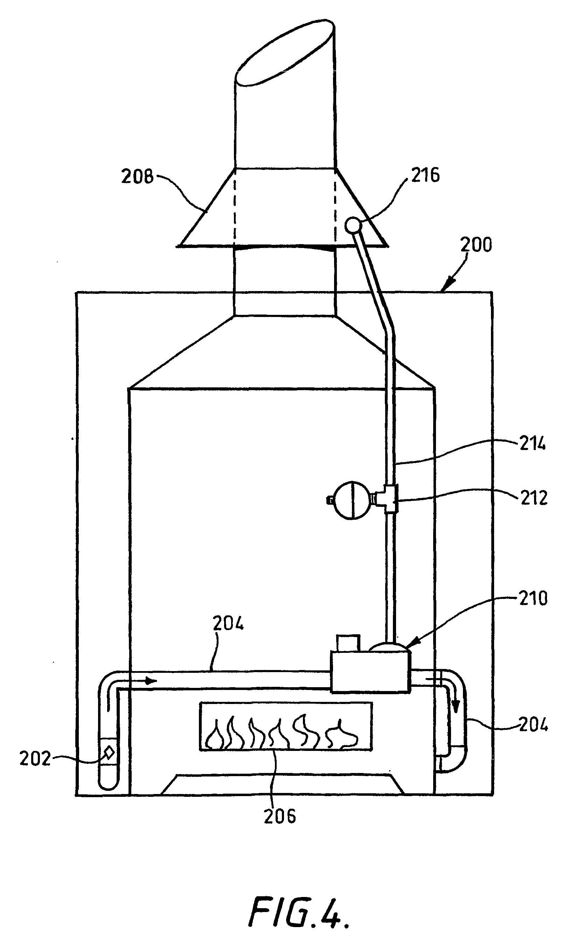

Referring to Figure 4, another temperature-sensitive safety valve assembly is shown. A furnace 200 has an on-off gas supply switch 202. Actuation of the switch 202 opens and closes an inlet (not shown) to allow gas to communicate via pipe 204 with the burner of the furnace. A burner region 206 is shown. Above this, there is arranged a flue 208. A temperature-sensitive safety valve assembly 210 is arranged on an inside surface of an inclined wall of the flue 108. A one-way valve 212 of the safety valve assembly 210 is arranged on a line 214 to a bulb 216 in the flue 208. In the event that the flue 208 becomes blocked hot gases will return down the flue causing the bulb to break, which in turn will close off the temperature-sensitive safety valve assembly 210 by thereby stopping gas flowing through the pipe 204 to the burner.

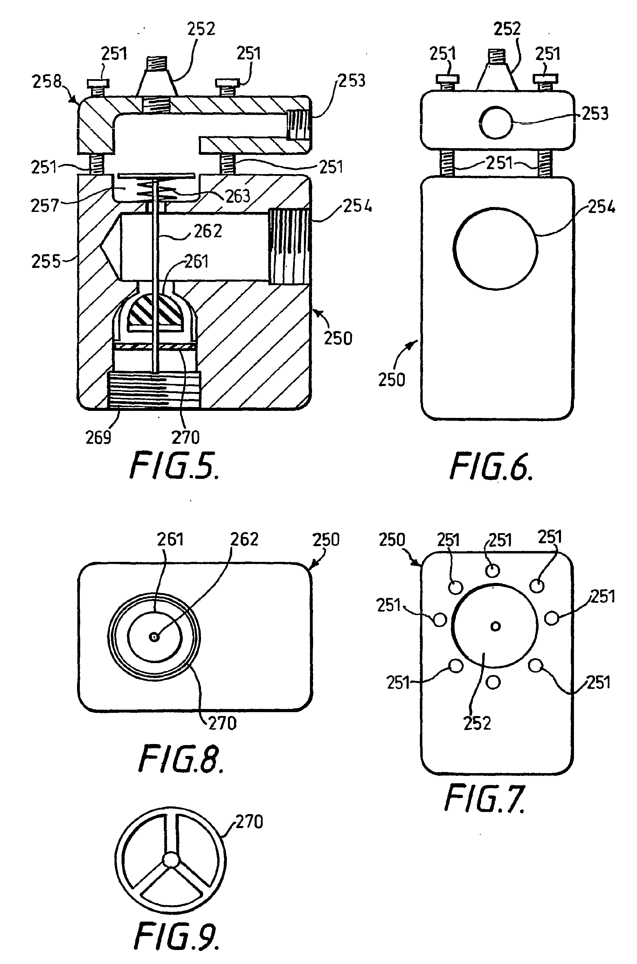

Referring to Figures 5 to 9, a safety valve assembly 250 comprises a body 258 defining a chamber for air, bolts 251, as inflation point 252, a 15 mm outlet 253 and a 28 mm outlet 254.

The 15 mm outlet 253 is in communication via a conduit (not shown) with a closure member as described with reference to Figure 1. The 28 mm outlet 254 is in communication with a fuel line (not shown).

The assembly 250 has a lower body 255 defining a gasket chamber 257, which supports a rod 262, a rubber washer 261, a spring 263, and a rod holder 270 (optionally of PVC). Figure 9 shows the spiked, wheel-like, structure of the rod holder 270.

The lower body 255 comprises a 28 mm inlet 269, which is put in communication with a fuel line (not shown).

Operation of the assembly 250 follows, in general, the principles of operation of the assembly 10 described above.

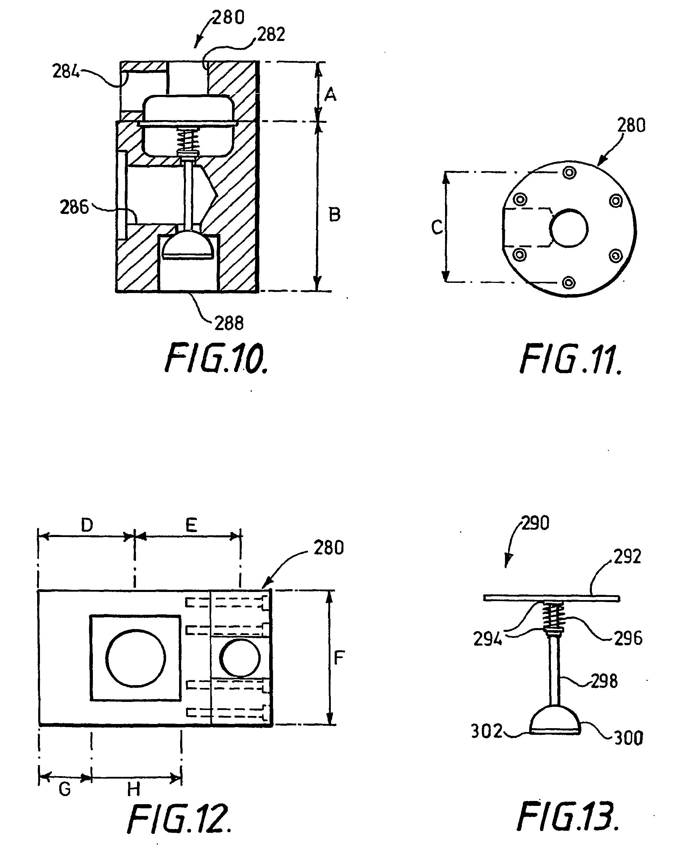

Referring to Figures 10 to 13, another safety valve assembly 280 comprises some similar parts to the safety valve 250 and therefore such parts will not be described again.

Referring to Figure 10, the total height of the body equals the height A, of the upper body (A=30 mm) and the height B of the lower body (B = 87 mm). The inflating point 282, outlet 284, outlet 286, and inlet 288 are, respectively 1/2" BSP, 1/2" BSP, 1" BSP and 1" BSP.

Referring to Figure 11, the distance C between diametrically opposed bolts is 58 mm.

Referring to Figure 12, the distance D from the bottom of the body to the centre of the outlet 286 is 49.5 mm. The distance E from the centre of the outlet 286 to the centre of the outlet 284 is 52.5 mm- The distance G from the bottom of the body to the lower edge of the region about the outlet 286 is 27 mm. The distance across the region about the outlet 286 is 45 mm.

Referring to Figure 13, a valve assembly 290 comprises a diaphragm 292, spring seats 294, a spring 296, a centre rod 298, a rubber seal 300 and a backing washer 302.

The valve can be made to tolerate pressures up to 6000 PSI.

The conduit can be a flexible hose.

An aim of the present invention is to provide a valve assembly (for closing and opening a fuel line) which senses other potentially unsafe conditions in which closure of (a fuel line) valve assembly is desirable.

Another aim of the present invention is to provide a valve assembly (for closing and opening a fuel line) which is wireless and remotely operable.

Yet another aim of the present invention is to provide an electronically operated valve assembly which is more reliable.

According to a first aspect of the invention there is provided a temperature-sensitive safety valve assembly comprising a first region for a first pressurised fluid, the region having a first outlet, a second region for a second pressurised fluid, the second region comprising a heat-sensitive sealing means, a valve between the first and second regions adapted to be actuated by the pressure of a first pressurised fluid in the first region against biasing means to open the outlet, the heat-sensitive sealing means in the second region fails at high temperature so as to de-pressurise the second region, thereby actuating the valve to move under the biasing means to close the first outlet and seal the first region, wherein the temperature-sensitive safety valve assembly comprises a relay unit, which is arranged to sense a parameter, and react to the sensing of the parameter by sealing the first region.

The input may be a sensed CO2 value, a sensed gas value, a sensed earth tremor, another potentially dangerous situation, or a sensed weather reading.

The assembly may have a audible or visual alert means, e.g. to alert employees in a building of the sensed state.

According to a second aspect of the invention there is provided a temperature-sensitive safety valve assembly comprising a first region for a first pressurised fluid, the region having a first outlet, a second region for a second pressurised fluid, the second region comprising a heat-sensitive sealing means, a valve between the first and second regions adapted to be actuated by the pressure of a first pressurised fluid in the first region against biasing means to open the outlet, the heat-sensitive sealing means in the second region being arranged to fail at high temperature so as to de-pressurise the second region, thereby actuating the valve to move under the biasing means to close the first outlet and seal the first region, wherein the temperature-sensitive safety valve assembly is also remotely, wirelessly, electronically operable.

The temperature-sensitive safety valve assembly of the first aspect and second aspect of the invention may be actuable by the axial movement of a rotary and axially movable shaft.

The shaft may cooperate with one or more stops which prevents movement of shaft. Preferably, the shaft cooperates with two stops. Most preferably, the two stops are arranged at opposing sides of the shaft periphery (i.e. spaced by 180 degrees). The or each stop is preferably motor driven. Most preferably the or each stop is mounted on a rotatable member.

According to a third aspect of the invention there is provided a temperature-sensitive safety valve assembly comprising a first region for a first pressurised fluid, the region having a first outlet, a second region for a second pressurised fluid, the second region comprising a heat-sensitive sealing means, a valve between the first and second regions adapted to be actuated by the pressure of a first pressurised fluid in the first region against biasing means to open the outlet, the heat-sensitive sealing means in the second region fails at high temperature so as to de-pressurise the second region, thereby actuating the valve to move under the biasing means to close the first outlet and seal the first region, wherein the temperature-sensitive safety valve assembly comprises an electronic device and a solar cell arranged to supply power to the electronic device.

Preferably, a temperature-sensitive safety valve assembly has the features of the second aspect and the third aspect of the invention.

In one preferred embodiment of the invention, the valve assembly is arranged in, or adjacent, a multi-room building such a multi-storey building.

The temperature-sensitive safety valve assembly of any of the aspects of the invention may comprise an electric panel board which senses the problem, alerts employees etc. and resets after the problem has been sensed (and solved).

The heat-sensitive sealing means comprises a glass bulb. The glass bulb is preferably liquid filled so at high temperature the liquid causes explosion of the bulb. The glass bulb is preferably brittle so upon failure it does not melt and maintain a seal. Liquid such as water is arranged upstream of the glass bulb so that when the glass bulb fails liquid is released. This liquid may be conveniently used to douse a fire.

The valve assembly preferably fits directly to a gas meter.

According to a fourth aspect of the invention there is provided a temperature-sensitive safety valve actuator assembly, comprising a region for a pressurised fluid such as air and heat sensitive sealing means on the region, to close the region, and a valve actuator, the temperature-sensitive safety valve actuator assembly being designed to be fitted to a valve assembly for a fluid supply line, and the heat sensitive sealing means being de-sealable at high temperature to de-pressurise the region, to move the valve actuator so as to open a region to actuate a valve assembly, the valve actuator also being actuable by an movable finger.

Preferably the finger is electronically operated.

In one preferred embodiment of the invention, one or more further temperature-sensitive safety valve assemblies are provided, the or each further temperature-sensitive safety valve assemblies being similar to the temperature-sensitive safety valve assembly, wherein at least one of the or each further temperature-sensitive safety valve assembly is in communication with the temperature-sensitive safety valve assembly so that de-sealing of the heat sensitive sealing means on the second region of the or each further temperature-sensitive safety valve assembly is communicated to the temperature-sensitive safety valve assembly to shut the outlet of the temperature-sensitive safety valve assembly.

The or each further temperature-sensitive safety valve assembly are all preferably in communication with the temperature-sensitive safety valve assembly.

According to a fifth aspect of the invention there is provided a building having a temperature-sensitive safety valve assembly or temperature-sensitive safety valve actuator assembly in accordance with, respectively, the first, second, third or fourth aspect of the invention fitted thereto.

A temperature-sensitive safety valve assembly in accordance with the invention will now be described, by way of example only, and with reference to the remaining accompanying drawings in which;

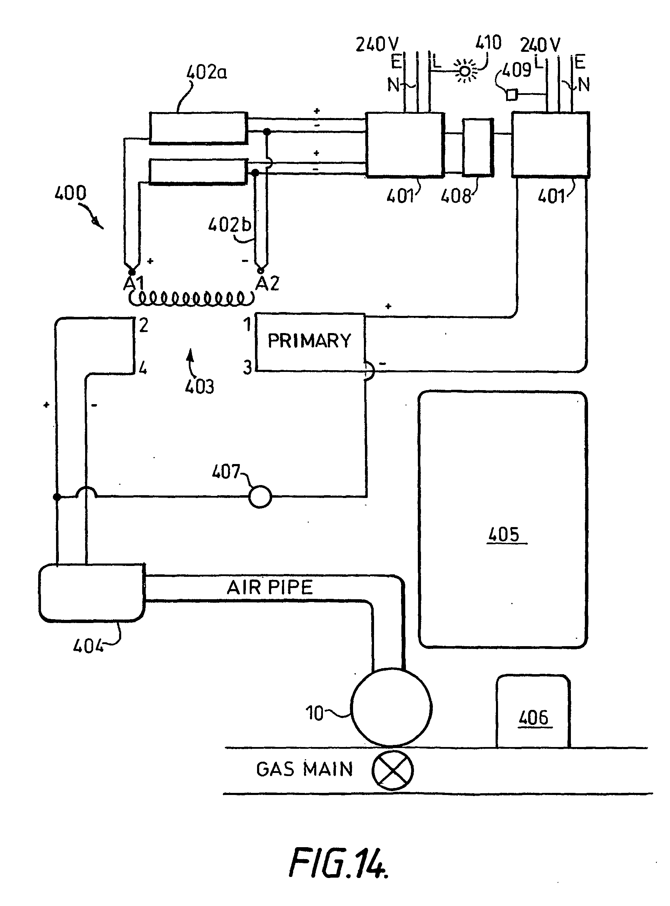

FIGURE 14 is a schematic view of the parts of a shut down device in accordance with the invention,

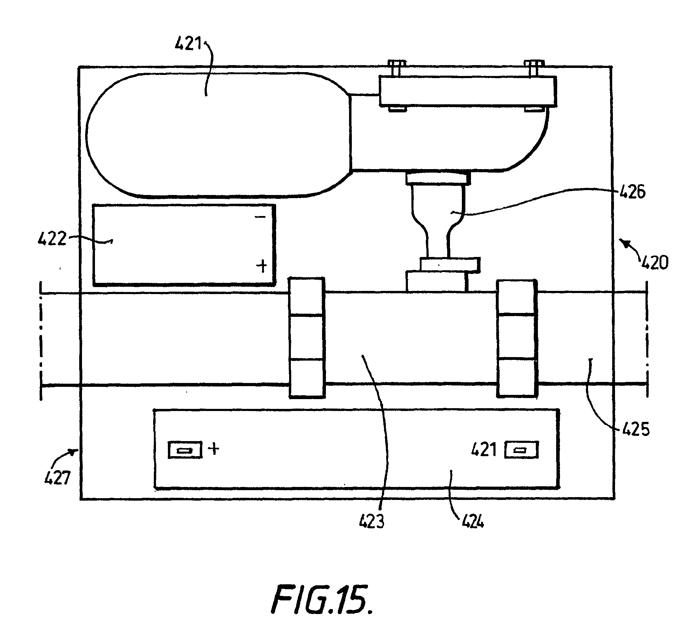

FIGURE 15 is a schematic side view of a valve assembly in accordance with the invention,

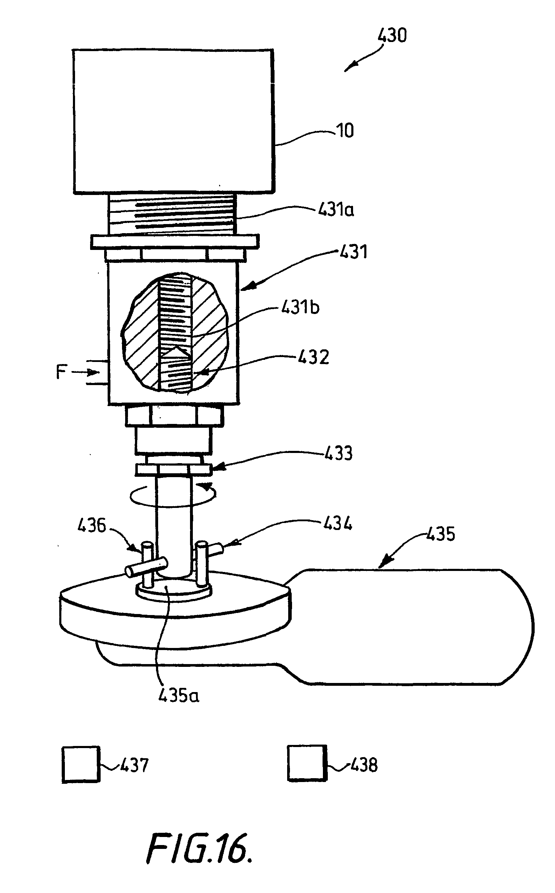

FIGURE 16 shows a schematic view, partly in cutaway, of a second valve assembly 430 in accordance with the invention,

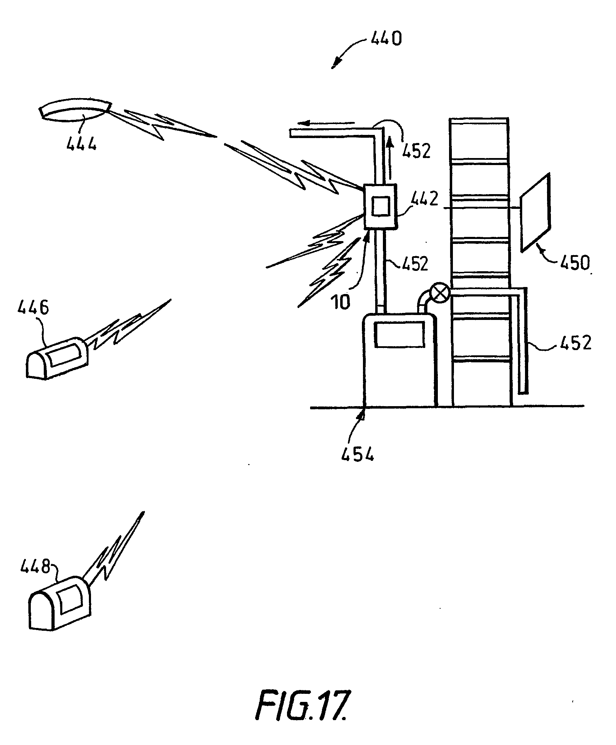

FIGURE 17 shows a schematic view of solar valve assembly in accordance with the invention,

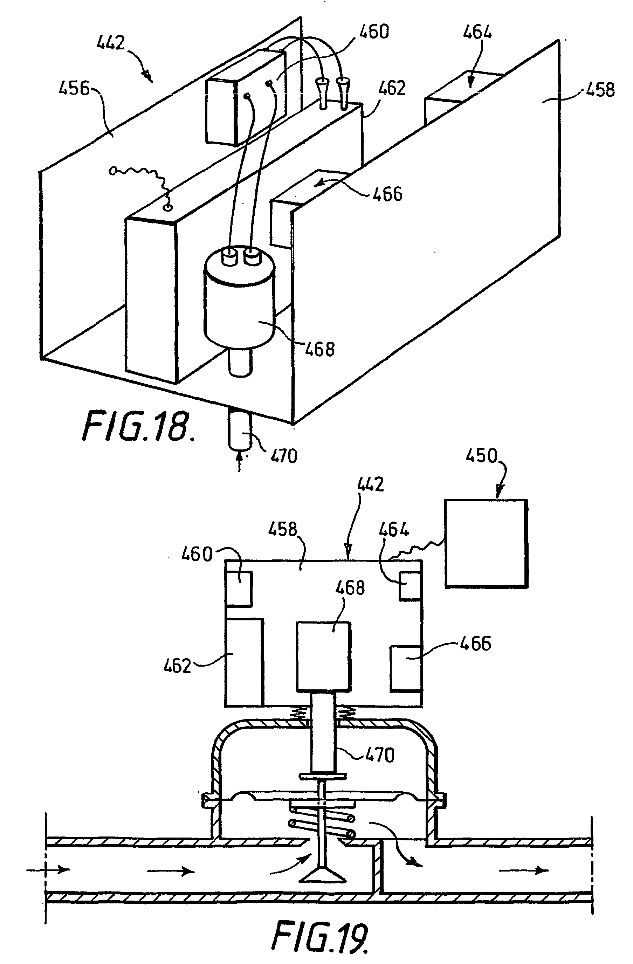

FIGURE 18 is a schematic perspective view, in cutaway, showing internal parts of the module of the solar valve assembly of FIGURE 17,
FIGURE 19 is a schematic side view, partly in cutaway, showing the module of FIGURE 17 connected to the temperature sensitive valve assembly described earlier, and

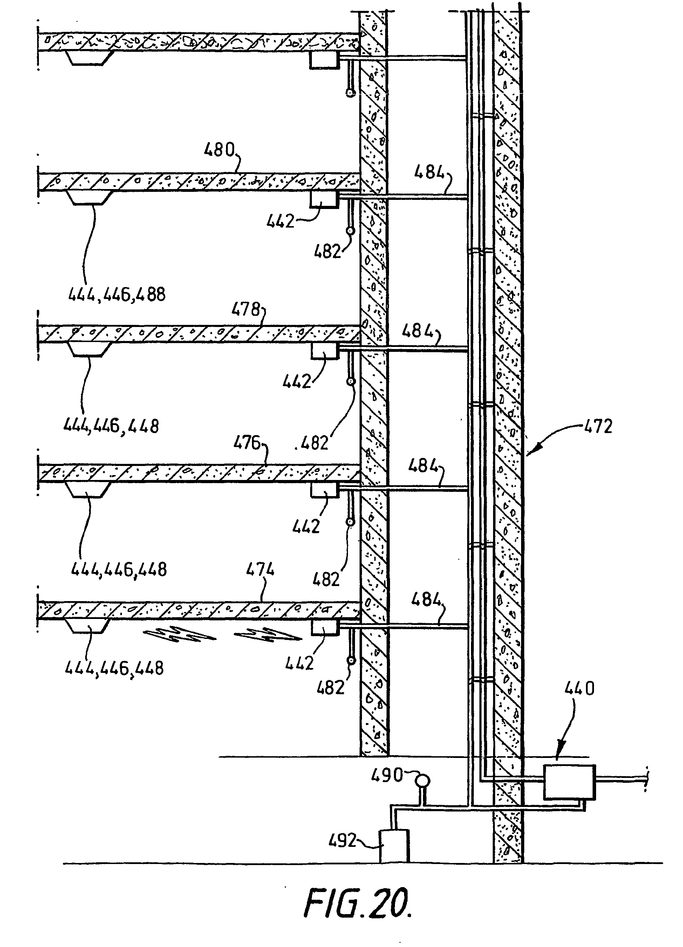

FIGURE 20 is a schematic side view of an array of temperature sensitive safety valve assemblies in a building, each valve assembly having a module as shown in FIGURE 17.

Referring to FIGURE 14, the parts of a shut down device 400 are denoted by the following reference numerals:-
- 401.: 6v and 24v transformers,
- 402a and 402b.: CO2 detector and gas detector,
- 403.: Relay unit,
- 404.: 24v solenoid valve,
- 405.: Panel board (locates fault in building, recharges and resets a safety valve),
- 406.: Compressor (to recharge the valve),
- 407.: Tremor detector,
- 408.: 12 hour back-up battery,
- 409.: Sounder, and a
- 410.: Warning light.

The shut down device 400 is designed to accompany the temperature -sensitive safety valve assembly 10 described hereinabove.

The valve assembly 10 will close down in the event of CO2, gas or tremor detection by CO2 detector 402a, gas detector 402b or tremor detector 407.

The valve assembly 10 is reset after the event of CO2, gas or tremor detection using panel board 405.

The shut down device 400 will then re-pressurize the valve assembly 10 and will then enable gas to pass through pipes after detection is rectified.

Referring to FIGURE 15, the valve assembly 420 comprises a 12 volt D/C geared motor 421, which is arranged to operate a removable joint 426 to actuate a ball type stop tap 423 in a pipe 425.

The motor 421 is powered by a 12 volt D/C battery 424.

A 12 volt D/C relay unit 422 controls the motor 421.

All of the above parts are housed in a PVC or metal box 427.

The valve assembly 420 is designed to be fitted to the valve 10 described above. On detection of poisonous gases the assembly 420 will react and open allowing pipe work to deflate by means of air or liquid. This is done by means of radio waves being sent from a gas detector sensor on reaction of gases. The valve will open with pressure in excess of 230 bar.

The valve could be fitted to any cylinder and on reaction open up cylinder.

Referring to FIGURE 16, a body 431 (made from brass) is attachable by, e.g. a threaded portion 431a to the temperature-sensitive sensor valve arrangement 10. The body 431 is a male iron or copper elbow. The body 431 defines an internal cavity 431b the surface of which is threaded.

A threaded (brass) rod 432 is arranged, partly in the cavity 43 1 b, so that the threads of the cavity surface and rod mesh.

A gland nut 433 seals around the rod 432 where it exits the body 431. The gland nut 433 can be tightened or loosened accordingly.

A lower end of the rod 432 has a pin 434 through it.

An electric 12 volt motor 435 has a cog 435a. A pair of (metal) pins 436 are welded to the cog 435a.

F denotes fuel inlet.

The rod 432 is arranged so that when the cog 435a rotates the pins 436 drive the pins 434, so as to rotate the rod 432 in both clockwise and anticlockwise directions.

A relay unit 437, like relay unit 403 in FIGURE 14, can be used to control the motor 435. Also, a remote fob 438, can be used to radio control the motor 435.

The gland nut 433 can be tightened or loosened accordingly (not shown).

Referring to FIGURE 17, the solar valve protect after the detection of gases, CO2 gases, smoke, also tremors. The valve works by means of radio waves, without any need of wiring. The valve can be connected to a telephone line and actuated by telephoning a predetermined number. In particular, the telephone call triggers a switch which operates the valve.

The solar valve can be set up for a site engineer or a petrol attendant to carry a fob button that in the event of gas, petrol, acids or dangerous conditions they would be able to close down the services by means of pointing the fob at the valve relay.

The solar valve could activate any given pipe line or any product that would need a valve fitted by means of a key ring fob.

The solar valve can protect people that cannot smell also people that cannot hear sounding alarms, giving total protection from gas and CO2 gases.

The solar valve gives protection of pipe lines from explosions etc.

The solar valve can set off containers releasing foams etc. or water services.

In another aspect of the invention a solar cell is in electrical communication with any valve assembly previously described hereinabove or hereinafter.

Referring to FIGURE 17, a fuel line (e.g. gas line) valve assembly comprises a temperature sensitive safety valve assembly 440 as described above. The assembly 440 comprises a module 442 and three remote detectors 444, 446, 448. In this case, the detector 444 is a smoke detector, the detector 446 is a CO₂ detector, and the detector 448 is a gas detector. Each detector 444, 446, 448 works at up to 300m range.

The assembly 440 is arranged in communication with a solar panel 450, which in this case is arranged on an external side wall of a building.

The assembly 440 is arranged in a fuel line, in particular in this case a gas line 452, downstream of the standard gas meter 454.

Referring to FIGURE 18, the module 442 comprises a radio solar panel 456, a casing 458, a radio beacon receiver 460, a low voltage battery (5 year lifetime) 462, a tremor switch 464, an alarm and phone relay 466, a solenoid 468, and a plunger 470, arranged to co-operate with earlier temperature sensitive safety valve assembly.

Referring to FIGURE 19, as soon as radio waves signal beacon receiver 460, the solenoid 468 releases plunger 470, which moves diaphragm to close valve, and shut off gas line.

Referring to FIGURE 20, temperature sensitive safety valve assembly 440 is arranged in a building 472. On each floor 474, 476, 478, 470 is arranged a module 442 and detectors 444, 446, 448. Also, on each floor 474, 476, 478, 470 is a heat sensitive bottle 482. The bottle 482 is in sealed communication by lines 484 with the valve assembly and when bottle 482 break assembly shuts off gas. The bottle 482 has water or other liquid in it so it explodes outwardly so as not to block outlet. Also, water is arranged upstream of bulb and when bulb fails the water is released onto a fire. An air gauge 490, which can be pre-set is connected to the line. A compressor 492 is also attached to the line so the valve assembly 440 can be recharged.

The small solar panel 450 charges the low voltage battery 462. The battery 462 connects to the solenoid 468 which is of a kind similar to the one in a car central locking device. A beacon relay is installed into PVC box to receive a signal from detectors 444, 446, 448 of figure 17. The detectors 444, 446, 448 can be fitted into any smoke, CO or gas detectors as illustrated on page 1 when assembled can transmit signals to solar powered valve 440. When this happens the solar powered valve will close off the gas supply, or petrol line, or hazardous fuels.

The solar powered valve 440 has no external wiring and works on radio signals. The solar valve 440 can then be mounted onto the valve assembly 10. It also can be fitted with a tremor switch that would react under earth tremors. There is also a relay fitted linked to a solenoid, which, when activated, would set off an alarm and also phone the switch board or fire department. The solar valve can be installed onto any location on earth needing only power from the sun to activate. The solar valve can be installed onto the valve assembly 10 which would be for commercial buildings. As in FIGURES 17 - 24 the solar valve is showing the various position the valve can be installed.

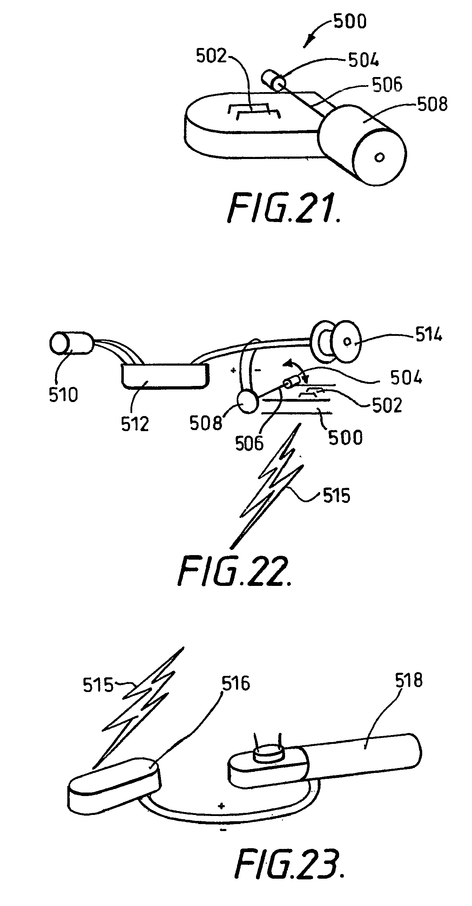

Referring to FIGURE 21, a remote control device 500 showing motor etc. comprises:-
- 502.: Reeth Connectors,
- 504.: Magnet,
- 506.: Arm connected to Motor, and a
- 508.: Motor

Referring to FIGURE 22, a remote control device 500 fitted to detector additionally comprising:-
- 510.: Detector (Sniffer),
- 512.: PCB Board, and a
- 514.: Speaker

Referring to FIGURE 23, a control unit fitted to valve assembly 10 comprises:-
- 516.: Control Unit Relay, and a
- 518.: Window Motor

Referring to FIGURE 21, the remote control unit uses a randomly encrypted code hopping technology so that the remote cannot be scanned and reproduced. The remote control has been developed to be used with an electric window motor. The motor has a geared cog which will close and open most valves. The mechanical finger (434 in FIGURE 16) has been designed for the valve assembly 10. When energised, the finger 434 will close and open the valve by means of an extended rod with washer assembly. When gases are apparent the detector 510 will react giving a reading of between 0.6 and 0.8 of a volt to the speaker 514. Positive and negative wires connect from the speaker 514 to the small electric motor 508.

The arm 506 connected to the motor 508 has a magnet 504 thereon. When the motor 508 turns the arm 506 and therefore the magnet 504, the magnet 504 will in turn rotate over reeds 502. The reeds 502 are bridged across the remote control button. When magnet 504 reaches reeds 502 they in turn send a signal 515 to the electric window motor 518, via control unit relay 516, closing valve down. To reset the system reverse motor. The motor will move away magnet 504 causing the reeds 502 to separate. This procedure replaces pressing the button on the remote control 500.

It will be appreciated by the reader that the valve arrangements for fuel lines disclosed herein offer significantly improve safety in comparison to the known valve arrangements.

## Claims

1. A temperature-sensitive safety valve assembly comprising a first region (50) for a first pressurised fluid, the region having a first outlet (54), a second region (20) for a second pressurised fluid, the second region comprising a heat-sensitive sealing means (34), a valve (26b) between the first and second regions adapted to be actuated by the pressure of a second pressurised fluid in the second region against biasing means (58) to open the outlet (54), the heat-sensitive sealing means in the second region (20) fails at high temperature so as to de-pressurise the second region (20), thereby actuating the valve (26b) to move under the biasing means (58) to close the first outlet (54) and seal the first region (50), wherein the temperature-sensitive safety valve assembly comprises a relay unit (403,437,466), which is arranged to sense a parameter, and react to the sensing of the parameter (402a,402b,407) by actuating the valve (26b) to seal the first region (50).

2. A temperature-sensitive safety valve assembly according to Claim 1, wherein the input is a sensed CO2 value (402a), a sensed gas value (402b), a sensed earth tremor (407), another potentially dangerous situation, or a sensed weather reading.

3. A temperature-sensitive safety valve assembly according to any preceding claim, wherein the assembly has a audible (409) or visual (410) alert means, e.g. to alert employees in a building of the sensed state.

4. A temperature-sensitive safety valve assembly according to any preceding claim, wherein the temperature-sensitive safety valve assembly is also remotely, wirelessly (438,444,446,448,460), electronically operable.

5. A temperature-sensitive safety valve assembly according to any preceding claim, wherein the temperature-sensitive safety valve assembly comprises an electronic device and a solar cell (450,456) arranged to supply power to the electronic device.

6. A temperature-sensitive safety valve assembly according to any preceding claim, wherein the valve assembly comprises a valve actuator actuated by de-pressurisation of the second region, the valve actuator also being actuable by a movable finger (434).

7. A temperature-sensitive safety valve assembly comprising a first region (50) for a first pressurised fluid, the region (50) having a first outlet (54), a second region (20) for a second pressurised fluid, the second region (20) comprising a heat-sensitive sealing means (36), a valve (26b) between the first and second regions adapted to be actuated by the pressure of a second pressurised fluid in the second region against biasing means (58) to open the outlet (54), the heat-sensitive sealing means (36) in the second region (20) being arranged to fail at high temperature so as to de-pressurise the second region (20) thereby actuating the valve (26b) to move under the biasing means (58) to close the first outlet (54) and seal the first region (50), wherein the temperature-sensitive safety valve assembly is also remotely, wirelessly (438,444,446,448,460), electronically operable.

8. A temperature-sensitive safety valve assembly according to any preceding claim, wherein the temperature-sensitive safety valve assembly is actuable by the axial movement of a rotary and axially movable shaft (432).

9. A temperature-sensitive safety valve assembly according to Claim 8, wherein the shaft cooperates with one or more stops (434) which prevents movement of shaft (432).

10. A temperature-sensitive safety valve assembly according to Claim 9, wherein the shaft cooperates with two stops (434).

11. A temperature-sensitive safety valve assembly according to Claim 10, wherein the two stops (434) are arranged at opposing sides of the shaft periphery (i.e. spaced by 180 degrees).

12. A temperature-sensitive safety valve assembly according to any of Claims 9 to 11, wherein the or each stop (434) is motor (435) driven.

13. A temperature-sensitive safety valve assembly according to any of Claims 9 to 12, wherein the or each stop is mounted on a rotatable member (435a).

14. A temperature-sensitive safety valve assembly comprising a first region (50) for a first pressurised fluid, the region (50) having a first outlet (54), a second region (20) for a second pressurised fluid, the second region (20) comprising a heat-sensitive sealing means (36), a valve between the first and second regions adapted to be actuated by the pressure of a second pressurised fluid in the second region against biasing means (58) to open the outlet (54), the heat-sensitive sealing means (36) in the second region (20) fails at high temperature so as to de-pressurise the second region (20), thereby actuating the valve (26b) to move under the biasing means (58) to close the first outlet (54) and seal the first region (50), wherein the temperature-sensitive safety valve assembly comprises an electronic device and a solar cell (450,456) arranged to supply power to the electronic device (442).

15. A temperature-sensitive safety valve assembly according to any preceding claim, wherein the valve assembly is arranged in, or adjacent, a multi-room building such as a multi-storey building (472).

16. A temperature-sensitive safety valve assembly according to any preceding claim, wherein the temperature-sensitive safety valve assembly comprises an electric panel (442) board which senses the problem, alerts employees etc. and resets after the problem has been sensed (and solved).

17. A temperature-sensitive safety valve assembly according to any preceding claim, wherein the heat-sensitive sealing means comprises a glass bulb (482).

18. A temperature-sensitive safety valve assembly according to Claim 17, wherein the glass bulb (482) is liquid filled so at high temperature the liquid causes explosion of the bulb (482).

19. A temperature-sensitive safety valve assembly according to Claim 17 or 18, wherein the glass bulb (482) is brittle so upon failure it does not melt and maintain a seal.

20. A temperature-sensitive safety valve assembly according to Claim 17, 18, or 19, wherein liquid such as water is arranged upstream of the glass bulb (482) so that when the glass bulb (482) fails liquid is released.

21. A temperature-sensitive safety valve actuator assembly, comprising a region (20) for a pressurised fluid such as air and heat sensitive sealing means (36) on the region, to close the region, and a valve actuator (26b), the temperature-sensitive safety valve actuator assembly being designed to be fitted to a valve assembly for a fluid supply line (50), and the heat sensitive sealing means (36) being de-sealable at high temperature to de-pressurise the region (20), to move the valve actuator (26b) so as to open the region to actuate a valve assembly, the valve actuator also being actuable by a movable finger (434).

22. A temperature-sensitive safety valve actuator assembly according to any preceding claim, wherein the finger (434) is electronically operated.

23. A temperature-sensitive safety valve actuator assembly according to any preceding claim, wherein one or more further temperature-sensitive safety valve assemblies are provided, the or each further temperature-sensitive safety valve assemblies being similar to the temperature-sensitive safety valve assembly, and at least one of the or each further temperature-sensitive safety valve assembly is in communication with the temperature-sensitive safety valve assembly so that de-sealing of the heat sensitive sealing means on the second region of the or each further temperature-sensitive safety valve assembly is communicated to the temperature-sensitive safety valve assembly to shut the outlet of the temperature-sensitive safety valve assembly.

24. A building having a temperature-sensitive safety valve assembly or temperature-sensitive safety valve actuator assembly in accordance with any one or more of Claims 1 to 23 fitted thereto.

## Patentansprüche

1. Eine Wärme empfindliche Sicherheitsventilanordnung, umfassend einen ersten Bereich (50) für ein erstes unter Druck stehendes Fluid, wobei dieser Bereich einen ersten Abgang (54) aufweist, einen zweiten Bereich (20) für ein zweites unter Druck stehendes Fluid, wobei der zweite Bereich ein Hitze empfindliches Abdichtmittel (34) umfasst, ein Ventil (26b), das zwischen dem ersten und dem zweiten Bereich angeordnet ist und das durch den Druck des unter Druck stehenden Fluids in dem zweiten Bereich gegen ein Absperrmittel (58) verstellbar ist, um den Abgang (54) zu öffnen, das Hitze empfindliche Abdichtmittel des zweiten Bereichs (20) versagt bei hohen Temperaturen, so dass es zu einer Druckminderung in dem zweiten Bereich (20) kommt und **dadurch** das Ventil (26b) unter das Absperrmittel (58) bewegt wird, um den ersten Abgang (54) zu verschließen und den ersten Bereich (50) abzudichten, **dadurch gekennzeichnet, dass** die Wärme empfindliche Sicherheitsventilanordnung eine Auslöseeinheit (403, 437, 466) umfasst, die so eingerichtet ist, dass sie eine Kenngröße misst und auf das Messen des Parameters (402a, 402b, 407) einwirkt, indem das Ventil (26b) in die Abdichtung des ersten Bereichs (50) verfahrbar ist.

2. Eine Wärme empfindliche Sicherheitsventilanordnung nach Anspruch 1, **dadurch gekennzeichnet, dass** die Eingabe ein gemessener CO₂-Wert (402a) ist, ein gemessener Gaswert (402b) ist, eine gemessene Erderschütterung (407) ist oder ein anderer potentiell gefährlicher Umstand oder ein gemessener Wetterwert ist.

3. Eine Wärme empfindliche Sicherheitsventilanordnung nach einem der vorangegangenen Ansprüche, **dadurch gekennzeichnet, dass** der Anordnung akustische (409) oder optische (410) Alarmmittel zugeordnet sind, um beispielsweise das angestellte Personal in einem Gebäude im überwachten Zustand, zu alarmieren.

4. Eine Wärme empfindliche Sicherheitsventilanordnung nach einem der vorangegangenen Ansprüche, **dadurch gekennzeichnet, dass** die Wärme empfindliche Sicherheitsventilanordnung des Weiteren ferngesteuert, kabellos (438, 444, 446, 448, 460), elektronisch betreibbar ist.

5. Eine Wärme empfindliche Sicherheitsventilanordnung nach einem der vorangegangenen Ansprüche, **dadurch gekennzeichnet, dass** die Wärme empfindliche Sicherheitsventilanordnung eine elektronische Vorrichtung umfasst, der eine Solarzelle (450, 456) zugeordnet ist, die die elektronische Vorrichtung mit Strom versorgt.

6. Eine Wärme empfindliche Sicherheitsventilanordnung nach einem der vorangegangenen Ansprüche, **dadurch gekennzeichnet, dass** die Ventilanordnung einen Ventilstellantrieb umfasst, um das Ventil bei der Druckentlastung des zweiten Bereichs zu verstellen; der Ventilstellantrieb auch durch einen entfernbaren Bolzen (434) stellbar ist.

7. Eine Wärme empfindliche Sicherheitsventilanordnung umfassend einen ersten Bereich (50) für ein erstes unter Druck stehendes Fluid, wobei dieser Bereich einen ersten Abgang (54) aufweist, einen zweiten Bereich (20) für ein zweites unter Druck stehendes Fluid, wobei der zweite Bereich ein Hitze empfindliches Abdichtmittel (34) umfasst, ein Ventil (26b), das zwischen dem ersten und dem zweiten Bereich angeordnet ist und das durch den Druck des unter Druck stehenden Fluids in dem zweiten Bereich gegen ein Absperrmittel (58) verstellbar ist, um den Abgang (54) zu öffnen, das Hitze empfindliche Abdichtmittel des zweiten Bereichs (20) versagt bei hohen Temperaturen, so dass es zu einer Druckminderung in dem zweiten Bereich (20) kommt und **dadurch** das Ventil (26b) unter das Absperrmittel (58) bewegt wird, um den ersten Abgang (54) zu verschließen und den ersten Bereich (50) abzudichten, **dadurch gekennzeichnet, dass** die Wärme empfindliche Sicherheitsventilanordnung auch ferngesteuert, kabellos (438, 444, 446, 448, 460), elektronisch betreibbar ist.

8. Eine Wärme empfindliche Sicherheitsventilanordnung nach einem der vorangegangenen Ansprüche, **dadurch gekennzeichnet, dass** die Wärme empfindliche Sicherheitsventilanordnung durch eine axiale Bewegung eines drehbaren und axial bewegbaren Schafts (432) stellbar ist.

9. Eine Wärme empfindliche Sicherheitsventilanordnung nach Anspruch 8, **dadurch gekennzeichnet, dass** der Schaft mit einem oder mehreren Anschlagstücken (434) zusammenwirkt, um eine Verschiebung des Schaftes (432) zu vermeiden.

10. Eine Wärme empfindliche Sicherheitsventilanordnung nach Anspruch 9, **dadurch gekennzeichnet, dass** der Schaft mit zwei Anschlagstücken (434) zusammenwirkt.

11. Eine Wärme empfindliche Sicherheitsventilanordnung nach Anspruch 10, **dadurch gekennzeichnet, dass** die zwei Anschlagstücke (434) an der Peripherie des Schaftes an sich gegenüberliegenden Seiten angeordnet sind (beispielsweise in einem Abstand von 180°).

12. Eine Wärme empfindliche Sicherheitsventilanordnung nach einem der Ansprüche 9 bis 11, **dadurch gekennzeichnet, dass** einer oder jeder der Anschläge (434) über einen Motor (435) antreibbar ist.

13. Eine Wärme empfindliche Sicherheitsventilanordnung nach einem der Ansprüche 9 bis 12, **dadurch gekennzeichnet, dass** ein oder jedes der Anschlagstücke an einer drehbaren Einheit (435a) befestigt ist.

14. Eine Wärme empfindliche Sicherheitsventilanordnung, umfassend einen ersten Bereich (50) für ein erstes unter Druck stehendes Fluid, wobei dieser Bereich einen ersten Abgang (54) aufweist, einen zweiten Bereich (20) für ein zweites unter Druck stehendes Fluid, wobei der zweite Bereich ein Hitze empfindliches Abdichtmittel (34) umfasst, ein Ventil (26b), das zwischen dem ersten und dem zweiten Bereich angeordnet ist und das durch den Druck des unter Druck stehenden Fluids in dem zweiten Bereich gegen ein Absperrmittel (58) verstellbar ist, um den Abgang (54) zu öffnen, das Hitze empfindliche Abdichtmittel des zweiten Bereichs (20) versagt bei hohen Temperaturen, so dass es zu einer Druckminderung in dem zweiten Bereich (20) kommt und **dadurch** das Ventil (26b) unter das Absperrmittel (58) bewegt wird, um den ersten Abgang (54) zu verschließen und den ersten Bereich (50) abzudichten, **dadurch gekennzeichnet, dass** die Wärme empfindliche Sicherheitsventilanordnung eine elektronische Vorrichtung und eine Solarzelle (450, 456) umfasst, um die elektronische Vorrichtung (442) mit Strom zu versorgen.

15. Eine Wärme empfindliche Sicherheitsventilanordnung nach einem der vorangegangenen Ansprüche, **dadurch gekennzeichnet, dass** die Ventilanordnung in einem oder in einem angrenzenden mehrgeschossigen Gebäude, wie beispielsweise einem Hochhaus (472), zugeordnet ist.

16. Eine Wärme empfindliche Sicherheitsventilanordnung nach einem der vorangegangenen Ansprüche, **dadurch gekennzeichnet, dass** die Wärme empfindliche Sicherheitsventilanordnung ein elektronisches Bedienfeld (442) umfasst, das eine Gefahr ermittelt und das das angestellte Personal alarmiert und so weiter, und das sich zurücksetzt, nachdem die Gefahr wahrgenommen wurde und beseitigt worden ist.

17. Eine Wärme empfindliche Sicherheitsventilanordnung nach einem der vorangegangenen Ansprüche, **dadurch gekennzeichnet, dass** das Wärme empfindliche Abdichtmittel einen Glaskolben (482) umfasst.

18. Eine Wärme empfindliche Sicherheitsventilanordnung nach Anspruch 17, **dadurch gekennzeichnet, dass** der Glaskolben (482) flüssigkeitsgefüllt ist, so dass die Flüssigkeit bei hoher Temperatur den Glaskolben (482) zum Platzen bringt.

19. Eine Wärme empfindliche Sicherheitsventilanordnung nach Anspruch 17 oder 18, **dadurch gekennzeichnet, dass** der Glaskolben (482) zerbrechlich ausgebildet ist, so dass er bei Versagen birst und nicht schmilzt, wodurch ein Verschluss zu Stande kämme.

20. Eine Wärme empfindliche Sicherheitsventilanordnung nach Anspruch 17, 18 oder 19, **dadurch gekennzeichnet, dass** die Flüssigkeit, wie beispielsweise Wasser, in dem Glaskolben (482) vorgeschaltet angeordnet ist, so dass im Falle des Berstens des Glaskolbens (482) die Flüssigkeit freigegeben wird.

21. Eine Wärme empfindliche Sicherheitsventilstellanordnung, umfassend eine erste Region (20) für ein unter Druck stehendes Fluid, wie etwa Luft, und ein Hitze empfindliches Abdichtmittel (36) in dem Bereich, um diesen Bereich zu schließen, und ein Ventilsteller (26b), wobei die Wärme empfindliche Sicherheitsventilstellanordnung so ausgelegt ist, dass diese in eine Ventilanordnung, die für Flüssigkeitsnachschubleitungen (50) ausgelegt ist, anpassbar ist; das Hitze empfindliche Abdichtmittel (36) bei hohen Temperaturen undicht ist, um den Bereich (20) über den Ventilsteller (26b) so zu bewegen, dass der Bereich der Ventilanordnung geöffnet wird und **dadurch** druckentlastet wird; der Ventilsteller aber ebenso auch über den bewegbaren Bolzen (434) verstellbar ist.

22. Eine Wärme empfindliche Sicherheitsventilstellanordnung, nach einem der vorausgegangenen Ansprüche, **dadurch gekennzeichnet, dass** der Bolzen (434) elektronisch betätigbar ist.

23. Eine Wärme empfindliche Sicherheitsventilstellanordnung, nach einem der vorangegangenen Ansprüche, **dadurch gekennzeichnet, dass** eine oder mehrere Wärme empfindliche Sicherheitsventilanordnungen vorgesehen sind, wobei diese oder jede weitere Wärme empfindliche Sicherheitsventilanordnung gleichartig ausgebildet sind und wenigstens eine oder mehrere der Wärme empfindlichen Sicherheitsventilanordnungen in Verbindung mit der Wärme empfindlichen Sicherheitsventilstellanordnung steht, so dass ein Öffnen des Hitze empfindlichen Dichtungsmittels in dem zweiten Bereich von einer oder jeder weiteren Wärme empfindlichen Sicherheitsventilanordnung an die Wärme empfindlichen Sicherheitsventilanordnung übermittelt wird und gewährleistet, dass der Abgang der Wärme empfindlichen Sicherheitsventilanordnung verschließbar ist.

24. Ein Gebäude mit einer Wärme empfindlichen Sicherheitsventilanordnung oder einer Wärme empfindlichen Sicherheitsventilstellanordnung nach einem oder mehreren der Ansprüche 1 bis 23.

## Revendications

1. Ensemble à soupape de sécurité sensible à la température, comprenant une première région (50) destinée à un premier fluide sous pression, cette région ayant une première sortie (54), une seconde région (20) destinée à un second fluide sous pression, la seconde région comprenant un dispositif (34) de fermeture étanche sensible à la chaleur, un obturateur (26b) placé entre les première et seconde régions et destiné à être manoeuvré par la pression du second fluide sous pression de la seconde région malgré la force d'un dispositif (58) de rappel afin que l'ouverture (54) soit ouverte, le dispositif de fermeture sensible à la chaleur placé dans la seconde région (20) présentant une défaillance à haute température afin de supprimer la pression de la seconde région (20) et de manoeuvrer ainsi l'obturateur (26b) qui se déplace sous l'action du dispositif (58) de rappel en fermant la première sortie (54) et en fermant de manière étanche la première région (50), dans lequel l'ensemble à soupape de sécurité sensible à la température comprend une unité à relais (403, 437, 466) qui est disposée afin qu'elle détecte un paramètre et qui réagit à la détection du paramètre (402a, 402b, 407) par manoeuvre de l'obturateur (26b) afin que la première région (50) soit fermée de manière étanche.

2. Ensemble à soupape de sécurité sensible à la température selon la revendication 1, dans lequel le signal d'entrée est une valeur détectée (402a) de CO₂, une valeur détectée (402b) d'un gaz, un tremblement de terre détecté (407), une autre situation potentiellement dangereuse, ou une lecture météorologique détectée.

3. Ensemble à soupape de sécurité sensible à la température selon l'une quelconque des revendications précédentes, dans lequel l'ensemble comporte un dispositif d'alerte audible (409) ou visuelle (410), destiné par exemple à alerter des employés d'un bâtiment de l'état détecté.

4. Ensemble à soupape de sécurité sensible à la température selon l'une quelconque des revendications précédentes, dans lequel l'ensemble à soupape de sécurité sensible à la température peut aussi être commandé électroniquement à distance sans fil (438, 444, 446, 448, 460).

5. Ensemble à soupape de sécurité sensible à la température selon l'une quelconque des revendications précédentes, dans lequel l'ensemble à soupape de sécurité sensible à la température comporte un dispositif électronique et une pile solaire (450, 456) disposée afin qu'elle transmette de l'énergie au dispositif électronique.

6. Ensemble à soupape de sécurité sensible à la température selon l'une quelconque des revendications précédentes, dans lequel l'ensemble à soupape comprend un organe de manoeuvre de soupape manoeuvré par la réduction de pression de la seconde région, l'organe de manoeuvre de soupape pouvant aussi être manoeuvré par un doigt mobile (434).

7. Ensemble à soupape de sécurité sensible à la température à soupape de sécurité sensible à la température comprenant une première région (50) destinée à un premier fluide sous pression, la région (50) ayant une première sortie (54), une seconde région (20) destinée à un second fluide sous pression, la seconde région (20) comprenant un dispositif (36) de fermeture étanche sensible à la chaleur, un obturateur (26b) placé entre la première et la seconde région et destiné à être manoeuvré par la pression d'un second fluide sous pression dans la seconde région malgré la force d'un dispositif (58) de rappel destiné à ouvrir la sortie (54), le dispositif (36) de fermeture sensible à la chaleur placé dans la seconde région (20) étant disposé afin qu'il présente une défaillance à température élevée en assurant ainsi la suppression de la pression de la seconde région (20) et en manoeuvrant ainsi l'obturateur (26b) afin qu'il se déplace sous l'action du dispositif (58) de rappel, ferme la première sortie (54) et ferme de manière étanche la première région (50), l'ensemble à soupape de sécurité sensible à la température pouvant aussi être commandé électroniquement à distance sans fil (438, 444, 446, 448, 460).

8. Ensemble à soupape de sécurité sensible à la température selon l'une quelconque des revendications précédentes, dans lequel l'ensemble à soupape de sécurité sensible à la température est destiné à être manoeuvré par un déplacement axial d'un arbre rotatif mobile axialement (432).

9. Ensemble à soupape de sécurité sensible à la température selon la revendication 8, dans lequel l'arbre coopère avec un ou plusieurs organes d'arrêt (434) qui empêchent le déplacement de l'arbre (432).

10. Ensemble à soupape de sécurité sensible à la température selon la revendication 9, dans lequel l'arbre coopère avec deux organes d'arrêt (434).

11. Ensemble à soupape de sécurité sensible à la température selon la revendication 10, dans lequel les deux organes d'arrêt (434) sont disposés sur des côtés opposés de la périphérie de l'arbre (c'est-à-dire sont espacés de 180°).

12. Ensemble à soupape de sécurité sensible à la température selon l'une quelconque des revendications 9 à 11, dans lequel l'organe d'arrêt ou chaque organe d'arrêt (434) est entraîné par un moteur (435).

13. Ensemble à soupape de sécurité sensible à la température selon l'une quelconque des revendications 9 à 12, dans lequel l'organe d'arrêt ou chaque organe d'arrêt est monté sur un organe rotatif (435a).

14. Ensemble à soupape de sécurité sensible à la température, comprenant une première région (50) destinée à un premier fluide sous pression, cette région (50) ayant une première sortie (54), une seconde région (20) destinée à un second fluide sous pression, la seconde région (20) comprenant un dispositif (36) de fermeture étanche sensible à la chaleur, un obturateur disposé entre les première et seconde régions et destiné à être manoeuvré par la pression d'un second fluide sous pression dans la seconde région malgré le dispositif (58) de rappel destiné à ouvrir la sortie (54), le dispositif (36) de fermeture étanche sensible à la chaleur placé dans la seconde région (20) présentant une défaillance à température élevée si bien qu'il supprime la pression de la seconde région (20) et manoeuvre ainsi l'obturateur (26b) afin qu'il se déplace sous l'action du dispositif (58) de rappel, ferme la première sortie (54) et ferme de manière étanche la première région (50), l'ensemble à soupape de sécurité sensible à la température comprenant un dispositif électronique et une pile solaire (450, 456) destinée à transmettre de l'énergie au dispositif électronique (442).

15. Ensemble à soupape de sécurité sensible à la température selon l'une quelconque des revendications précédentes, dans lequel l'ensemble à soupape est disposé dans un bâtiment de plusieurs pièces ou près d'un tel bâtiment, tel qu'un bâtiment à plusieurs étages (472).

16. Ensemble à soupape de sécurité sensible à la température selon l'une quelconque des revendications précédentes, dans lequel l'ensemble à soupape de sécurité sensible à la température comprend un panneau électrique (442) qui détecte le problème, alerte les employés, etc. et se réarme après la détection (et la résolution) du problème.

17. Ensemble à soupape de sécurité sensible à la température selon l'une quelconque des revendications précédentes, dans lequel le dispositif de fermeture étanche sensible à la chaleur comprend une ampoule de verre (482).

18. Ensemble à soupape de sécurité sensible à la température selon la revendication 17, dans lequel l'ampoule de verre (482) est remplie d'un liquide tel que, à température élevée, le liquide provoque une explosion de l'ampoule (482).

19. Ensemble à soupape de sécurité sensible à la température selon la revendication 17 ou 18, dans lequel l'ampoule de verre (482) est fragile si bien que, après défaillance, elle ne fond pas et assure le maintien de l'étanchéité.

20. Ensemble à soupape de sécurité sensible à la température selon la revendication 17, 18 ou 19, dans lequel un liquide tel que l'eau est disposé du côté amont de l'ampoule de verre (482) afin que, lorsque l'ampoule de verre (482) se casse, un liquide soit libéré.

21. Ensemble à organe de manoeuvre de soupape de sécurité sensible à la température, comprenant une région (20) destinée à un fluide sous pression tel que l'air et un dispositif (36) de fermeture étanche sensible à la chaleur sur cette région afin qu'il ferme cette région, et un organe (26b) de manoeuvre d'obturateur, l'ensemble à organe de manoeuvre de soupape de sécurité sensible à la température étant destiné à être monté sur un ensemble à soupape destiné à une canalisation (50) d'alimentation en fluide, et le dispositif (36) d'étanchéité sensible à la chaleur pouvant être écarté de sa position d'étanchéité à température élevée afin qu'il supprime la pression de ladite région (20) et déplace l'organe de manoeuvre de soupape (26b) afin que ladite région soit ouverte pour la manoeuvre d'un ensemble à soupape, l'organe de manoeuvre de soupape étant aussi destiné à être commandé par un doigt mobile (434).

22. Ensemble à organe de manoeuvre de soupape de sécurité sensible à la température selon l'une quelconque des revendications précédentes, dans lequel le doigt (434) est manoeuvré électroniquement.

23. Ensemble à organe de manoeuvre de soupape de sécurité sensible à la température selon l'une quelconque des revendications précédentes, dans lequel un ou plusieurs ensembles supplémentaires à soupape de sécurité sensibles à la température sont incorporés, l'ensemble ou chaque ensemble supplémentaire à soupape de sécurité sensible à la température étant analogue audit ensemble à soupape de sécurité sensible à la température, et au moins l'un des ensembles ou chaque ensemble supplémentaire à soupape de sécurité sensible à la température est en communication avec l'ensemble à soupape de sécurité sensible à la température de manière que la suppression de l'étanchéité du dispositif de fermeture étanche sensible à la chaleur sur la seconde région de l'ensemble ou de chaque ensemble supplémentaire à soupape de sécurité sensible à la température communique avec l'ensemble à soupape de sécurité sensible à la température pour fermer la sortie de l'ensemble à soupape de sécurité sensible à la température.

24. Bâtiment possédant un ensemble à soupape de sécurité sensible à la température ou un ensemble à organe de manoeuvre de soupape de sécurité sensible à la température selon l'une quelconque au moins des revendications 1 à 23, monté dans le bâtiment.
